# EUROPÄISCHE PATENTSCHRIFT

(11) **EP 2 159 352 B1**
(45) Veröffentlichungstag und Bekanntmachung des Hinweises auf die Patenterteilung: **30.09.2020**
(21) Anmeldenummer: 09011076.8
(22) Anmeldetag: 28.08.2009
(51) Int. Cl.: E04H 15/08, B60P 3/34

(54) **Zelt- oder Schutzdach**
Tent roof or protective roof
Toît de tente ou de protection

(30) Priorität: 01.09.2008 DE 102008045274
(43) Veröffentlichungstag der Anmeldung: 03.03.2010
(73) Patentinhaber: Holtkamp, Egbert Berend, 9561 JK Ter Apel (NL)
(72) Erfinder: Holtkamp, Egbert Berend, 9561 JK Ter Apel (NL)
(74) Vertreter: Deters, Frank

(56) Entgegenhaltungen:
- EP-A1- 2 169 147
- DE-U1- 20 216 105
- US-A- 5 080 426
- US-A- 5 449 032

## Beschreibung

Die Erfindung betrifft ein Zelt- oder Schutzdach in Form einer mit einem Campinganhänger o. dgl. Campingfahrzeugen transportablen Faltkonstruktion gemäß dem Oberbegriff des Anspruchs 1.

Mit einem Campinganhänger transportable Faltkonstruktionen, die ein Zelt- oder Schutzdach bilden, sind seit längerem bekannt (DE 28 41 550; US 7,178,536 B2), wobei mittels einer jeweiligen mit dem Anhänger verbundenen Gestängekonstruktion für eine flexible Dachhaut eine entsprechende Gebrauchslage vorgegeben wird. Die die Gestängekonstruktion bildenden Stützstangen sind dabei in Form von im wesentlichen verwindungssteifen Rohrteilen vorgesehen, die durch Gelenkteile o. dgl. Verbinder so gehalten sind, dass für derartige Faltsysteme durch eine entsprechende Stellbewegung unterschiedliche Gebrauchs- bzw. Nichtgebrauchsstellungen erreichbar sind.

In der Gebrauchslage der Gestängekonstruktion wird mittels der im wesentlichen geraden Stangen- und Rohrteile eine aus spezieller Zeltbahn bestehende Dachhaut zu pultförmigen, ebenen oder winklig zueinander verlaufenden Wandabschnitten geformt. Durch diesen Aufbau der Gestängekonstruktion nach Art eines Steilwandzeltes ist das System insgesamt windanfällig und der innere Nutzraum ist im Nahbereich der Stangen- und Rohrteile eingeengt. In DE 39 08 603 A1 ist ein als einfaches Arbeitszelt für Versorgungsunternehmen verwendetes Giebelzelt vorgeschlagen, bei dem sich zwischen zwei Stützstangen eine jeweils endseitig mit diesem verbundene Quer-Stange erstreckt, die in Längsrichtung jeweilige Abknickungen bzw. eine bogenförmige Wölbung aufweist. Durch diese an beiden Enden mit Stützstangen zu verbindende bogenförmige Quer-Stange soll die Anwendbarkeit einfacher Zelte auf Baustellen von Versorgungsunternehmen verbessert werden.

Bei den am Markt befindlichen und als schwergewichtige Steilwand-Zeltdächer klassifizierbaren Gestängebaugruppen - in Abgrenzung zu leichtgewichtigen Kuppelzelten - werden neben geraden Stützstangen auch bereits "bogenförmige" Stützstangen verwendet, deren Anwendung sich jedoch nicht bewährt hat. Durch unterschiedliche Radien dieser Stützstangen weisen diese Systeme eine den Platzbedarf beim Transport erhöhende Sperrigkeit auf, eine gemeinsame Verpackung dieser Teile mit geraden Stangen ist hinderlich und bei der Montage einer Vielzahl von Stangen ist eine positionsgerechte Ausrichtung nur wenig bedienfreundlich möglich. Gemäß DE 690 17 150 T2 ist ein Kuppelzelt in Leichtbauweise vorgeschlagen, bei dem an sich bekannte biegeelastische Stangen an beiden Enden bodenseitig fixiert werden. Dieses System muss durch zusätzliche längenverstellbare Zugglieder gegen Verformung im Bereich der bogenförmig aufgespannten Stangen geschützt werden. Bei einem Vorzelt für einen Wohnwagen gemäß DE 20 2006 013 697 U1 wird ein an einer Wand des Wohnwagens befestigtes Planenteil mit einem ebenfalls wandseitig zu fixierenden Gestänge kombiniert. Dieses zum Bodenbereich hin abgestützte Gestänge wirkt mit einem dieses kreuzenden Zusatzgestänge zusammen, so dass eine bogenförmige Ausrichtung des Planenteils erreicht wird und zwischen dem Wohnwagen und dem seitlichen Bodenbereich ein eine bogenförmige Seitenwand aufweisendes Vorzelt gebildet ist. In der US 8,080,426 ist ein Campinganhänger mit einem Zelt offenbart, der zur Erweiterung der Zeltkontur schwenkbare Ausleger am Zeltgestänge vorsieht. Die DE 202 16 105 zeigt ein Gestänge für ein Zeltdach, mit dem ein über eine Zeltwand vorstehendes Vordach realisiert werden kann. US 5,449,032 zeigt ein Gestänge für ein bogenförmiges profiliertes Vordach einer Campingunterkunft. Hierbei sind die bogenförmig ausgebildeten Gestängeteile teleskopierbar.

Bei einem gattungsbildenden Campinganhänger in Form des zusammenklappbaren Wohnwagens gemäß DE 692 08 053 T3 (ähnlich US 7,178,536 B2) wird ein auch bei Steilwand-Zelten verwendetes Gerippe aus Rohr- und Profilteilen aufgebaut. Bei diesem Zeltaufbau ist zur Aufnahme einer biegsamen Platte als Abdeckteil auf dem Gerippe ein als Bogen-Stange geformtes Profilteil vorgesehen, das zur Aufnahme der Platte jeweilige Aussparungen und Halteteile aufweist.

Die Erfindung befasst sich mit dem Problem, ein insbesondere für einen Campinganhänger als transportable Faltkonstruktion vorgesehenes Zelt- oder Schutzdach zu schaffen, das in aufgestellter Gebrauchslage mit geringem technischem Aufwand einen Nutzraum aus weniger windanfälligen Gestängeteilen bildet, bei im wesentlichen gleich bleibenden Dachhautabmessungen einen verbesserten Komfort im Nutzraum aufweist und mit einer optisch ansprechenden Dachkontur formbare Erweiterungszonen ermöglicht.

Die Erfindung löst diese Aufgabe durch ein Zelt- oder Schutzdach für einen Campinganhänger mit den Merkmalen des Anspruchs 1. Weitere vorteilhafte Ausgestaltungen ergeben sich aus den Ansprüchen 2 bis 14

Bei einem insbesondere für Campinganhänger hergestellten Zelt- oder Schutzdach mit einer nach Art eines Steilwandzeltes auffaltbaren Grundstruktur ist erfindungsgemäß vorgesehen, dass dieses Faltsystem durch zumindest einen zusätzlichen, in die Gestängebaugruppe bzw. die von dieser gehaltene flexible Dachhaut integrierbaren Pendelarm ergänzt wird. Dieser Pendelarm wird nach Art eines Hilfsgestänges in das System integriert, so dass mit der weitgehend unveränderten Gestängebaugruppe - auch in der als schwergewichtig definierten Ausführung - bei geringem Aufwand jeweilige funktionale und optisch wirksame Erweiterungszonen am Zeltdach geschaffen werden.

Das Konzept des Pendelarms basiert darauf, dass dieser an zumindest einem Gestängeteil einen Hauptverbindungspunkt definiert und von diesem aus jeweils zwei Arme als im wesentlichen frei abragende Teilbereiche unterhalb der Dachhaut wirksam sind, derart, dass das Arm-System entsprechend der Gestängebaugruppe um den Hauptverbindungspunkt "pendelnd" eingestellt werden kann bzw. unter Wirkung einer äußeren oder inneren Belastung eine "pendelnde" Ausgleichsbewegung ausführt.

Mit dem erfindungsgemäßen Pendelarm wird eine einfache und im Anwendungsfall effiziente Lösung zur Funktionserweiterung an Campinganhänger-Zelten, Familienzelten, Wohnwagenvorzelten o. dgl. Konstruktionen vorgeschlagen. Bei der Anwendung des Hilfsgestänges mit Pendelarm kann ein bekanntes einfaches Zeltgestänge mit im wesentlichen geraden Stangen - die weiterhin eine schnelle Faltmontage beim Aufstellen bzw. eine Demontage durch Zurückfalten in den Bereich des Anhängers ermöglichen - mit den bekannten Vorteilen bei der Handhabung unverändert eingesetzt werden. Der erfindungsgemäße Pendelarm als ein in variablen Größen einsetzbares Zusatzbauteil kann so bemessen werden, dass in optisch hervortretenden Bereichen der Dachhaut eine unterschiedlichen Kundenwünschen entsprechende zusätzliche Bogenform erzeugt wird. Gleichzeitig kann damit die in den Abmessungen weitgehend unveränderte Dachhaut so verlagert werden, dass im darunter liegenden Nutzraum eine Volumen- bzw. Platzerweiterung erreicht wird und die Bequemlichkeit für den Nutzer verbessert ist.

In vorteilhafter Ausführung werden ein oder mehrere Pendelarm(e) des Hilfsgestänges so in das Zeltgestänge integriert, dass eine verbesserte Aufnahme von Druck- und Zugbelastungen im Bereich der Dachhaut, beispielsweise durch Winddruck, Regenwasserauflage o. dgl. erreicht ist. Die bogenförmig in der Einbaulage gespannten Pendelarme schaffen dabei eine Konturform, die sich optimale an auftretende Windkräfte anpasst, so dass durch eine Wind ableitende Kontur das Systems insgesamt eine verbesserte Sturmfestigkeit aufweist und auch bei Starkregen eine optimale Wasserableitung gewährleistet ist.

Die weitgehend beliebig erweiterbare Pendelarm-Struktur kann dabei so konzipiert werden, dass bisher üblicherweise angewandte Gestängeteile für Vorzelte, Sonnendächer o. dgl. durch die neuartigen Pendelarme ersetzt werden und so die Anzahl der Bauteile verringert wird. Die als Hilfsgestänge vorgesehenen Pendelarm-Teile können dabei auch in die als Rohrteile ausgebildeten Stützstangen eingebaut bzw. an diese angebaut werden, so dass diese als teleskopierbare Teile mitführbar und vor Ort in eine entsprechende Gebrauchsstellung herausziehbar sind. Ebenso ist vorgesehen, die Pendelarme als parallel zu den Gestängeteilen ausrichtbare Teile anzubringen, so dass eine enge Packlage in der Nichtgebrauch- bzw. Transportlage möglich wird.

Bei derartigen Dachausführungen mit den Pendelarm-Teilen ist insbesondere eine Firststange des Faltgestänges in ihrem Einsatzbereich erweiterbar, wobei insbesondere die als biegsame Teile ausgebildeten Pendelarme längs bzw. quer zur Mittellängsachse positionierbar sind und damit eine Vielzahl von Funktionserweiterungen in diesem Dachbereich möglich ist.

Weitere Einzelheiten und vorteilhafte Ausgestaltungen der Erfindung ergeben sich aus der nachfolgenden Beschreibung und der Zeichnung, die mehrere Ausführungsbeispiele eines Zelt- oder Schutzdaches mit erfindungsgemäßem Pendelarm veranschaulichen. In der Zeichnung zeigen:
- Fig. 1: eine dem Stand der Technik entsprechende Ausführung des Campinganhängers mit aus diesem herausgeklappten Zelt- oder Schutzdach,
- Fig. 2: eine Perspektivdarstellung ähnlich Fig. 1 mit einer Gestängebaugruppe, in die ein erfindungsgemäßer Pendelarm integriert ist,
- Fig. 3 und Fig. 4: jeweilige Seitenansichten des Systems ähnlich Fig. 2 mit mehreren Pendelarmen,
- Fig. 5: eine Seitenansicht ähnlich Fig. 3 mit Erweiterung des Nutzraumes,
- Fig. 6: eine Prinzipdarstellung unterschiedlicher Befestigungs- und Bewegungsmöglichkeiten mehrerer der Pendelarme,
- Fig. 7: eine Perspektivdarstellung ähnlich Fig. 1 mit einer Grundausführung des Zeltes mit mehreren Pendelarmen, und
- Fig. 8: eine Prinzipdarstellung weiterer Einsatzmöglichkeiten von Pendelarmen im Bereich des Gestänges.

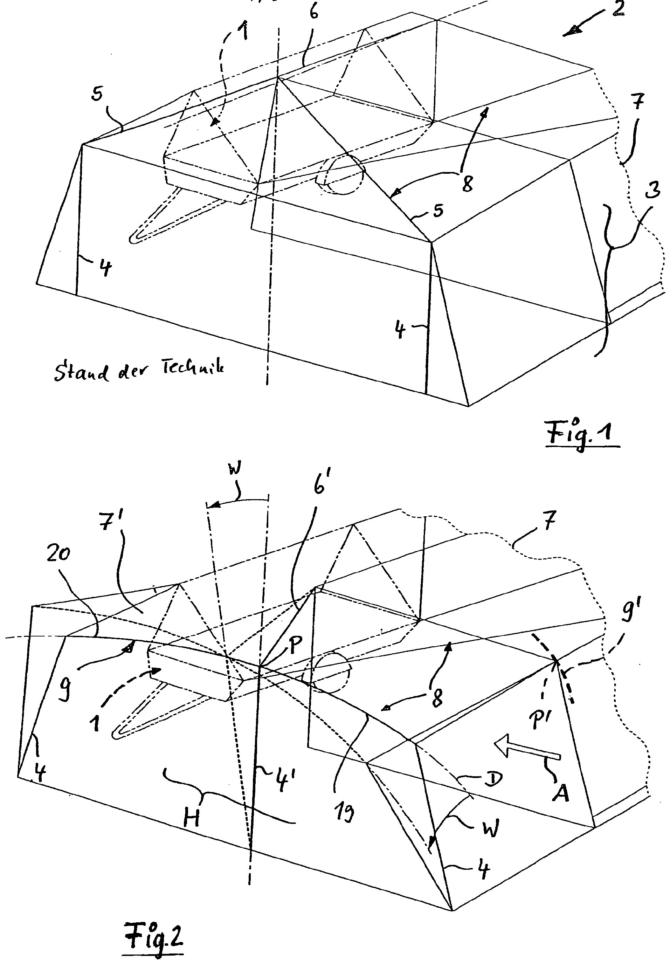

In Fig. 1 ist in einer Perspektivdarstellung eine Campingbaugruppe veranschaulicht, bei der ein eine transportable Faltkonstruktion aufnehmender Campinganhänger 1 verwendet wird. Aus diesem Campinganhänger 1 heraus wird ein insgesamt mit 2 bezeichnetes Zelt- oder Schutzdach aufgebaut, das nach Art einer Steilwand-Baugruppe 3 aufgestellt wird. Diese Konstruktion ist mit einer mehrere starre Stützstangen 4, 5, 6 aufweisenden und für eine flexible Dachhaut 7 die Gebrauchslage vorgebenden Gestängebaugruppe 8 versehen.

Ausgehend von dieser an sich bekannten Ausführung einer Zelt- oder Schutzdach-Konstruktion des Steilwandzeltes 2 ist erfindungsgemäß vorgesehen, diese Gestängebaugruppe 8 mit zumindest einem die Dachhaut 7' in Einbaulage profilierenden Pendelarm 9 zu versehen. Die Prinzipdarstellung gemäß Fig. 2 verdeutlicht dabei, dass der einen Dachhautbereich 7' insbesondere bogenförmig profilierende Pendelarm 9 zur Gestängebaugruppe 8 hin einen als starre oder gelenkige Halterung ausführbaren Hauptverbindungspunkt P definiert, so dass eine durch Strichlinien verdeutlichte "Pendel-Beweglichkeit" des Systems erreicht wird und in diesem der Pendelarm 9 nach Art eines Hilfsgestänges H wirksam ist.

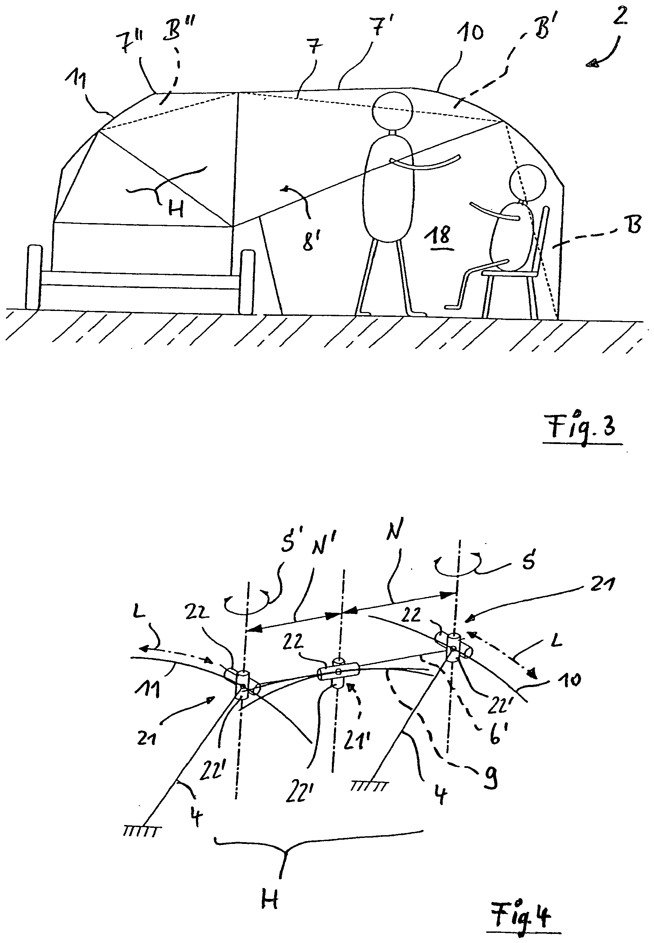

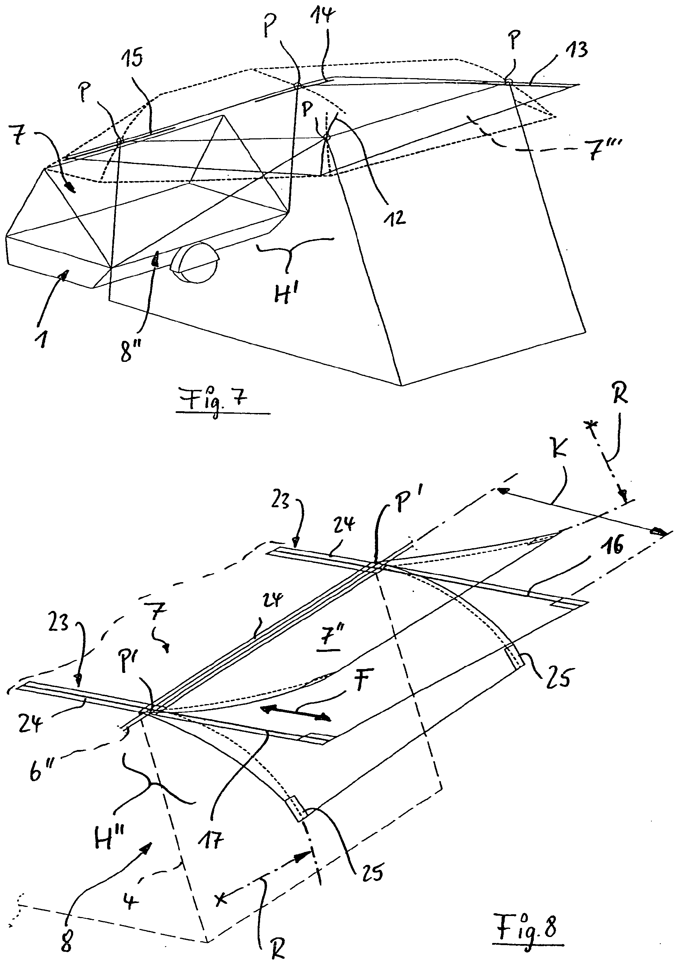

Es versteht sich, dass die Gestängebaugruppe 8 auch mit mehreren, jeweilige Bereiche der Dachhaut 7 untergreifenden Pendelarmen 10, 11 (Fig. 3 bis 6), 12 bis 15 (Fig. 7) und/oder 16, 17 (Fig. 8) versehen sein kann. Bei 9' ist ein weiterer Pendelarm mit den Tragstangen der Gestängebaugruppe 8 verbunden (Fig. 2), wobei ein Verbindungspunkt P' definiert ist, der als "gleichwirkend" mit dem vorderen Punkt P anzusehen ist.

Bereits die Ausführung des Pendelarms 9 gemäß Fig. 2 macht deutlich, dass mit dieser neuen Art des Hilfsgestänges H eine bogenförmige Dachhaut-Optik (Bogenlinie D, Strich-Punkt-Darstellung) erzeugbar ist. Ausgehend von diesem Steilwand-Konzept gemäß Fig. 2 wird so mit geringem Aufwand erreicht, dass in den aus geraden Stützstangen 4, 6' resultierenden Dachbereichen eine zusätzliche Erweiterungskontur geschaffen werden kann.

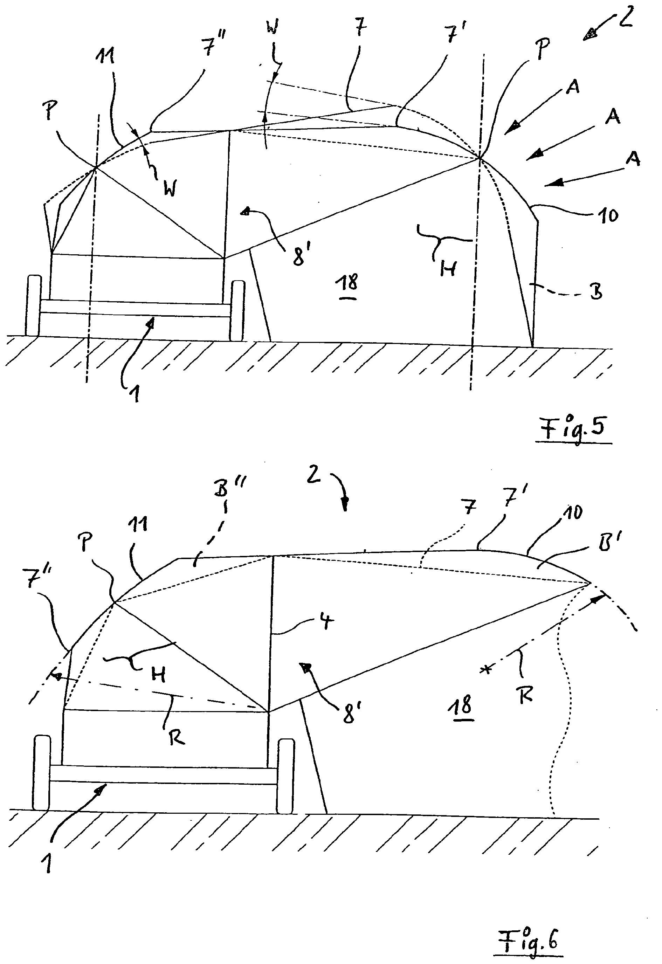

Die Zusammenschau von Fig. 2 und Fig. 5 verdeutlicht, dass mittels der im jeweiligen Verbindungspunkt P, P' gelagerten Pendelarme 9, 9' bzw. 10 und 11 eine Spannstruktur gebildet ist, mittels der auf die jeweiligen bogenförmigen Bereiche der Dachhaut 7', 7" einwirkende Druck- und/oder Zugbelastungen durch Wind o. dgl. Witterungseinflüsse (Pfeil A) ausgleichbar sind. In Fig. 2 und Fig. 5 wird durch jeweilige Pfeile W eine aus diesen Belastungen resultierende Schwenkverlagerung im Bereich der Pendelarme 9, 10, 11 verdeutlicht, wobei deren Lage und die Position der Dachhaut 7 durch jeweilige Strichlinien angedeutet sind. Diese Prinzipdarstellungen zeigen auch, dass die Belastungen der Dachhaut 7 ausgehend vom Bereich der Pendelstangen 9, 9', 10, 11 gleichmäßig in die jeweilige Gestängebaugruppe 8 eingeleitet werden. Durch diese bogenförmigen Konturerweiterungen der Dachhaut 7', 7" ist gleichzeitig eine verbesserte Wasserableitung bei Starkregen oder Taubildung erreichbar.

Die Prinzipdarstellungen gemäß Fig. 3 sowie Fig. 5 und Fig. 6 verdeutlicht, dass mit den in variablen Abmessungen ausführbaren Pendelarmen 10, 11 jeweilige einen Zeltinnenraum 18 bogenförmig begrenzende und nach außen erweiterte Bereiche B, B', B" der Dachkonturen gebildet werden. Durch ein entsprechendes Konzept des Hilfsgestänges H mit Pendelarmen können damit für kundenspezifisch unterschiedliche Dachkonstruktionen jeweilige variable Volumen- bzw. Flächenerweiterungen im Bereich des inneren Nutzraumes 18 vorgegeben werden, so dass insgesamt eine Komfortverbesserung für derartige Campingzelte erreichbar ist.

Bei der konstruktiven Ausführung der vorbeschriebenen Hilfsgestänge H mit den Pendelarmen 9, 9', 10, 11, 12 bis 17 ist denkbar, die Pendelarme aus weitgehend biegestabilen und mit bogenförmigen Längskonturen geformten Bauteilen herzustellen (nicht dargestellt). Damit können zwar die vorgeschriebenen Effekte der bogenförmigen Konturerweiterung und der Belastungsverbesserung erreicht werden, gleichwohl sind diese biegestabilen Bauteile mit den Nachteilen komplizierter Handhabung und dem nachteilig großen Transportvolumen bekannter schwergewichtiger Zeltausführungen verbunden.

Deshalb sieht das erfindungsgemäße Konzept Hilfsgestänge H, H', H" vor, bei denen die Pendelarme 9, 9', 10, 11, 12 bis 17 zumindest bereichsweise aus einem flexiblen Material bestehen und diese Pendelarme in der Einbaulage weitgehend variabel in eine vorgesehene Bogenkontur D, R umformbar sind. Sämtliche der Prinzipdarstellungen gemäß Fig. 2 bis 8 gehen davon aus, dass die Pendelarme der Hilfsgestänge H, H', H" in der Einbaulage mittels jeweiliger - für derartige Faltkonstruktionen an sich bekannter - Spannelemente in die bogenförmige Dachkontur eingeformt werden.

Das Konzept des Hilfsgestänges H, H', H" sieht vor, dass die jeweiligen Pendelarme so in die Dachhaut 7 integriert sind, dass deren mit den an sich bekannten Halteteilen erzeugte Wandspannung auch zur Einstellung jeweiliger Radien R der Pendelarme 10, 11 (Fig. 6, Fig. 8) nutzbar ist. In Anpassung an die jeweilige Ausführung des Zelt- oder Schutzdaches 2 können damit entsprechend der bogenförmigen Längskontur der Pendelarme 9, 9', 10, 11, 12 bis 17 gleichmäßige Radien R als Bogenform sichtbar sein, so dass der optische Gesamteindruck der Dach- und Wandteile der Zelte 2 insgesamt verbessert bzw. an die Vorgabe des Nutzers angepasst ist.

In Fig. 2 ist eine Anwendung des einen Vorzeltbereich des Systems 2 bildenden Pendelarmes 9 gezeigt, wobei dieser in seiner Längsrichtung im wesentlichen mittig mit einer der vertikal verlaufenden Stützstangen 4' des Gestänges 8 verbunden ist und damit gleichzeitig den Hauptverbindungspunkt P als im wesentlichen mittig angeordnet definiert. Ebenso ist denkbar, dass der jeweilige Pendelarm ausgehend vom Hauptverbindungspunkt P die zwei Schenkelabschnitte 19, 20 als unterschiedlich lange Teile bildet (nicht dargestellt).

In Fig. 4 sind weitere prinzipielle Einstellmöglichkeiten des Hilfsgestänges H anhand eines Systems ähnlich der Pendelarme 10 und 11 dargestellt. Diese Pendelarme sind im Bereich jeweiliger den Verbindungspunkt P bildender Halterungen 21 schwenkbar (Pfeil S, S') an den Stützstangen 4 gehalten. Im Bereich dieser Halterungen 21 können jeweilige Gelenkteile 22, 22' vorgesehen sein, so dass eine entsprechende Verschiebung L in Längsrichtung denkbar ist. Mit 21' ist eine weitere Ausführung der Halterung angedeutet, zu deren Bereich hin eine horizontale Verschiebung (Pfeil N, N') der Teile des Hilfsgestänges H denkbar ist. Das System gemäß Fig. 4 kann dabei so ausgeführt sein, dass die Halterung 22, 21' den "ersten" Pendelarm 9 (ähnlich Fig. 2) erfasst und an dessen Enden die dargestellten Pendelarme 10 und 11 mit den die äußeren Verbindungspunkte definierenden Halterungen 21 eine damit dreifach wirkende "Pendelarm"-Kette bilden.

In der Ausführungsform des Hilfsgestänges H' mit den Pendelarmen 16, 17 gemäß Fig. 8 ist eine weitere Festlegungsvariante der Pendelarme 16, 17 im Bereich der Dachhaut 7 dargestellt, wobei ausgehend von den Hauptverbindungspunkten P' die jeweilige Auskraglänge K der Pendelarme 16, 17 einstellbar sein kann.

Für eine unmittelbare Festlegung der Pendelarme 16, 17 an der Dachhaut 7 sind entsprechende als Aufnahmetaschen bzw. Aufnahmelaschen geformte Bereiche 23 vorgesehen. Denkbar ist, diese durch jeweilige Saumzonen 24 abzutrennen und im Innenraum dieser Ausnehmungen 23 die Pendelarme 16, 17 zu fixieren. Dieses Systems des Hilfsgestänges H" kann bei der vor Ort erfolgenden Montage komplettiert werden, wobei die jeweiligen Enden der Pendelarme 16, 17 endseitig in die Taschen 23 der Dachhaut 7' eingesteckt werden. Entsprechend der Konstruktion der Stützstangen 4, 6" bzw. der jeweiligen nicht näher dargestellten Spannmittel kann ein Dachhautbereit 7" bzw. die entsprechend in vorderen Laschen 25 gehaltenen Pendelarmen 16, 17 in eine jeweilige Gebrauchslage gezogen werden (Pfeil F, Fig. 8). Im Bereich der Saumzonen 24 sind entsprechende Reißverschlussverbindungen denkbar, so dass das Hilfsgestänge H" nach Art eines Vordaches o. dgl. einfach montierbar ist.

In Fig. 7 ist ähnlich der Vordach-Ausführung gemäß Fig. 8 eine Festlegung der Pendelarme 12, 13, 14, 15 nach Art eines Hilfsgestänges H' vorgesehen, wobei dieses einerseits mit dem Anhänger 1 verbunden ist und anderenends im freitragenden Bereich ein die Dachhaut 7 erweiterndes Vordach 7'" untergreift. Ebenso ist denkbar, diese viergliedrige Pendelarm-Konstruktion gemäß H' für ein mehrere Dachhaut-Lagen aufweisendes Doppel-Dach-Gestänge vorzusehen, so dass insbesondere eine obere der Dachhautlagen (z.B. 7'") ebenfalls in einer bogenförmigen Kontur ausrichtbar ist (ähnlich Fig. 7).

## Patentansprüche

1. Zelt- oder Schutzdach, welches eine mit einem Campinganhänger (1) transportable Faltkonstruktion ist, mit einer Gestängebaugruppe (8) als Steilwand-Baugruppe (3) und einer flexiblen Dachhaut (7), wobei die Gestängebaugruppe (8) starre Stützstangen (4, 5, 6) aufweist und die Gebrauchslage für die flexible Dachhaut (7) vorgibt **dadurch gekennzeichnet, dass** ein Pendelarm (9, 9'; 10, 11; 12 bis 15; 16, 17) die Dachhaut (7') zumindest bereichsweise erfassend und an zumindest einem Gestängeteil der Gestängebaugruppe (8, 8', 8") einen Hauptverbindungspunkt (P, P') definierend ausgebildet ist, wobei von dem Hauptverbindungspunkt (P, P')aus zwei Arme des Pendelarms (9, 9'; 10, 11; 12 bis 15; 16, 17) als im wesentlichen frei abragende Teilbereiche unterhalb der Dachhaut wirksam sind.

2. Zelt- oder Schutzdach nach Anspruch 1, **dadurch gekennzeichnet, dass** der Pendelarm (9) in seiner Längsrichtung im wesentlichen mittig mit einer der vertikal verlaufenden Stützstangen (4') des Gestänges (8) verbunden ist und damit der Hauptverbindungspunkt (P) definiert ist.

3. Zelt- oder Schutzdach nach Anspruch 1, **dadurch gekennzeichnet, dass** der Pendelarm (9) ausgehend vom Hauptverbindungspunkt (P, P') zwei unterschiedlich lange Schenkelabschnitte (19, 20) definiert.

4. Zelt- oder Schutzdach nach einem der Ansprüche 1 bis 3, **dadurch gekennzeichnet, dass** der Pendelarm (10, 11; 16, 17) im Bereich des Gestänges (8, 8') und/oder der Dachhaut (7) verschiebbar gehalten ist, derart, dass ausgehend vom Hauptverbindungspunkt (P, P')unterschiedliche Längen (L, K) des Pendelarms (10, 11; 16,17) einstellbar sind.

5. Zelt- oder Schutzdach nach einem der Ansprüche 1 bis 4, **dadurch gekennzeichnet, dass** der Pendelarm (9, 9'; 10, 11; 12 bis 15; 16, 17) die Dachhaut (7') zumindest bereichsweise bogenförmig profiliert.

6. Zelt- oder Schutzdach nach einem der Ansprüche 1 bis 5, **dadurch gekennzeichnet, dass** mittels des zumindest einen als variables Zusatzbauteil vorgesehenen und nach Art eines Hilfsgestänges (H, H', H") wirksamen Pendelarms (9, 9'; 10, 11; 12 bis 15; 16, 17) ausgehend vom jeweiligen Hauptverbindungspunkt (P, P') eine bogenförmige Dachhaut-Optik (D) erzeugbar ist, derart, dass zusätzlich zu den aus geraden Stützstangen (4, 5, 6) resultierenden Dachbereichen (7) der Steilwand-Baugruppe (3) diese mit einer Erweiterungskontur (B, B', B") versehen ist.

7. Zelt- oder Schutzdach nach Anspruch 6, **dadurch gekennzeichnet, dass** der bzw. die Pendelarme des Hilfsgestänges (H, H', H") aus weitgehend biegestabilen und zumindest bereichsweise mit einer bogenförmigen Längskontur vorgeformten Bauteilen bestehen.

8. Zelt- oder Schutzdach nach Anspruch 6, **dadurch gekennzeichnet, dass** der bzw. die Pendelarme (9, 9'; 10, 11; 12 bis 15; 16, 17) des Hilfsgestänges (H, H', H") aus einem flexiblen Material bestehen und damit diese Pendelarme mittels jeweiliger für Faltkonstruktionen an sich bekannter Spannelemente in der Einbaulage die bogenförmige Dachkontur (D) bilden.

9. Zelt- oder Schutzdach nach Anspruch 8, **dadurch gekennzeichnet**, der bzw. die Pendelarme (9, 9'; 10, 11; 12 bis 15; 16, 17) in der Einbaulage weitgehend variabel in eine vorgesehene Bogenkontur (D, R) umformbar sind.

10. Zelt- oder Schutzdach nach einem der Ansprüche 1 bis 9, **dadurch gekennzeichnet, dass** die Gestängebaugruppe (8, 8', 8") mit mehreren jeweilige Bereiche der Dachhaut (7', 7") untergreifenden Pendelarmen (9, 9'; 10, 11; 12 bis 15; 16, 17) versehen ist.

11. Zelt- oder Schutzdach nach einem der Ansprüche 1 bis 10, **dadurch gekennzeichnet, dass** die Abmessungen der Pendelarme (10, 11) variabel ausgebildet sind, und mit den Pendelarmen (10,11) jeweilige vom Zeltinnenraum (18) bogenförmig nach außen erweiterte Dachkonturen gebildet und damit variable Volumen- bzw. Flächenerweiterungen (B, B', B") im Bereich des inneren Nutzraumes vorgebbar sind.

12. Zelt- oder Schutzdach nach einem der Ansprüche 1 bis 11, **dadurch gekennzeichnet, dass** der Pendelarm (16, 17) unmittelbar an der Dachhaut (7) in einer Aufnahmetasche, -lasche o. dgl. Bereich (23) verschieblich gehalten ist.

13. Zelt- oder Schutzdach nach einem der Ansprüche 1 bis 12, **dadurch gekennzeichnet, dass** eine den Pendelarm (16, 17) umgrenzende Saumzone (24) mit einem Reißverschluss vorgesehen ist.

14. Zelt- oder Schutzdach nach einem der Ansprüche 1 bis 13, **dadurch gekennzeichnet, dass** der zumindest eine Pendelarm (12, 13, 14, 15) in die Konstruktion eines zwei Dachhaut-Lagen (7) aufweisenden Doppel-Dach-Gestänges integrierbar ist.

## Claims

1. Tent roof or canopy, which is a folding structure which can be transported with a camping trailer (1), comprising a linkage assembly (8) as a steep wall assembly (3), and a flexible roof membrane (7), the linkage assembly (8) having rigid support rods (4, 5, 6) and specifying the position of use for the flexible roof membrane (7), **characterised in that** a pendulum arm (9, 9'; 10, 11; 12 to 15; 16, 17) is designed to capture the roof membrane (7') at least in regions, and to define a main connection point (P, P') on at least at one linkage part of the linkage assembly (8, 8', 8"), two arms of the pendulum arm (9, 9'; 10, 11; 12 to 15; 16, 17), starting from the main connection point (P, P'), acting as substantially freely projecting portions below the roof membrane.

2. Tent roof or canopy according to claim 1, **characterised in that** the pendulum arm (9) is connected substantially centrally to one of the vertically extending support rods (4') of the linkage (8) in the longitudinal direction of said arm, and the main connection point (P) is thus defined.

3. Tent roof or canopy according to claim 1, **characterised in that** the pendulum arm (9), starting from the main connection point (P, P'), defines two leg portions (19, 20) of different lengths.

4. Tent roof or canopy according to any of claims 1 to 3, **characterised in that** the pendulum arm (10, 11; 16, 17) is slidably held in the region of the linkage (8, 8') and/or the roof membrane (7), such that, starting from the main connection point (P, P'), different lengths (L, K) of the pendulum arm (10, 11; 16, 17) can be set.

5. Tent roof or canopy according to any of claims 1 to 4, **characterised in that** the pendulum arm (9, 9'; 10, 11; 12 to 15; 16, 17) profiles the roof membrane (7') at least in regions in an arcuate manner.

6. Tent roof or canopy according to any of claims 1 to 5, **characterised in that**, by means of the at least one pendulum arm (9, 9'; 10, 11; 12 to 15; 16, 17), which is provided as a variable additional component and acts in the manner of an auxiliary linkage (H, H', H"), starting from the relevant main connection point (P, P'), an arcuate roof membrane appearance (D) can be created such that, in addition to the roof regions (7) of the steep wall assembly (3) resulting from straight support rods (4, 5, 6), the steep wall assembly is provided with an extension contour (B, B', B").

7. Tent roof or canopy according to claim 6, **characterised in that** the pendulum arm(s) of the auxiliary linkage (H, H', H") consist of largely flexurally stable components which are preformed, at least in regions, with an arcuate longitudinal contour.

8. Tent roof or canopy according to claim 6, **characterised in that** the pendulum arm(s) (9, 9'; 10, 11; 12 to 15; 16, 17) of the auxiliary linkage (H, H', H") consist(s) of a flexible material, and these pendulum arms, in the installed position, therefore form the arcuate roof contour (D) by means of respective clamping elements which are known per se for folding structures.

9. Tent roof or canopy according to claim 8, **characterised in that** the pendulum arm(s) (9, 9'; 10, 11; 12 to 15; 16, 17) in the installed position can be reshaped into an intended arc contour (D, R) in a largely variable manner.

10. Tent roof or canopy according to any of claims 1 to 9, **characterised in that** the linkage assembly (8, 8', 8") is provided with a plurality of pendulum arms (9, 9'; 10, 11; 12 to 15; 16, 17) which engage under respective regions of the roof membrane (7', 7").

11. Tent roof or canopy according to any of claims 1 to 10, **characterised in that** the dimensions of the pendulum arms (10, 11) are variable, and, by means of the pendulum arms (10, 11), respective roof contours are formed which are extended outwards in an arcuate manner from the tent interior (18), and variable volume and area expansions (B, B', B") can therefore be specified in the region of the inner usable space.

12. Tent roof or canopy according to any of claims 1 to 11, **characterised in that** the pendulum arm (16, 17) is slidably held directly on the roof membrane (7), in a receiving pocket, receiving tab or similar region (23).

13. Tent roof or canopy according to any of claims 1 to 12, **characterised in that** a seam zone (24) bordering the pendulum arm (16, 17) is provided with a zipper.

14. Tent roof or canopy according to any of claims 1 to 13, **characterised in that** the at least one pendulum arm (12, 13, 14, 15) can be integrated into the structure of a double roof linkage having two roof membrane layers (7).

## Revendications

1. Toit de tente ou de protection, qui est une construction pliante qui peut être transportée avec une remorque de camping (1), avec un module de timonerie (8) servant de module de paroi en pente (3) et un panneau de toit souple (7), dans lequel le module de timonerie (8) présente des supports rigides (4, 5, 6) et prédéfinit la position d'utilisation pour le panneau de toit souple (7), **caractérisé en ce qu**'un bras pivotant (9, 9' ; 10, 11 ; 12 à 15 ; 16, 17) est réalisé pour couvrir le panneau de toit (7') au moins dans certaines zones et définir un point de liaison principal (P, P') au niveau d'au moins une pièce de timonerie du module de timonerie (8, 8', 8"), dans lequel, à partir du point de liaison principal (P, P'), deux bras parmi les bras pivotants (9, 9' ; 10, 11 ; 12 à 15 ; 16, 17) servent pour être utilisés en dessous du panneau de toit comme des zones partielles qui font saillie sensiblement librement.

2. Toit de tente ou de protection selon la revendication 1, **caractérisé en ce que** le bras pivotant (9) est, dans sa direction longitudinale, relié sensiblement centralement à un des supports rigides (4') de la timonerie (8) qui s'étendent verticalement et le point de liaison principal (P) est ainsi défini.

3. Toit de tente ou de protection selon la revendication 1, **caractérisé en ce que** le bras pivotant (9) définit, à partir du point de liaison principal (P, P'), deux sections de branche (19, 20) de longueurs différentes.

4. Toit de tente ou de protection selon une des revendications 1 à 3, **caractérisé en ce que** le bras pivotant (10, 11 ; 16, 17) au niveau de la timonerie (8, 8') et/ou le panneau de toit (7) est maintenu de manière mobile de telle sorte que, à partir du point de liaison principal (P, P'), différentes longueurs (L, K) du bras pivotant (10, 11 ; 16,17) peuvent être réglées.

5. Toit de tente ou de protection selon une des revendications 1 à 4, **caractérisé en ce que** le bras pivotant (9, 9' ; 10, 11 ; 12 à 15 ; 16, 17) profile la forme d'arc du panneau de toit (7') au moins dans certaines zones.

6. Toit de tente ou de protection selon une des revendications 1 à 5, **caractérisé en ce que**, à l'aide de l'au moins un bras pivotant (9, 9' ; 10, 11 ; 12 à 15 ; 16, 17) prévu sous la forme d'un élément de construction supplémentaire variable et agissant sous la forme d'une timonerie accessoire (H, H', H"), un aspect de panneau de toit (D) en forme d'arc peut être généré à partir du point de liaison principal (P, P') respectif de telle sorte que, en plus des zones de toit (7) du module de paroi en pente (3) résultant des supports rigides (4, 5, 6) droits, ce module est muni d'un contour d'agrandissement (B, B', B").

7. Toit de tente ou de protection selon la revendication 6, **caractérisé en ce que** le respectivement les bras pivotants de la timonerie accessoire (H, H', H") sont composés d'éléments de construction en grande partie stables au pliage et préformés au moins dans certaines zones avec un contour longitudinal en forme d'arc.

8. Toit de tente ou de protection selon la revendication 6, **caractérisé en ce que** le respectivement les bras pivotants (9, 9' ; 10, 11 ; 12 à 15 ; 16, 17) de la timonerie accessoire (H, H', H") sont composés d'un matériau flexible et donc ces bras pivotants forment, à l'aide d'éléments de serrage respectifs connus en soi pour les constructions pliantes, le contour de toit (D) arqué dans la position de montage.

9. Toit de tente ou de protection selon la revendication 8, **caractérisé en ce que** le respectivement les bras pivotants (9, 9' ; 10, 11 ; 12 à 15 ; 16, 17) dans la position de montage peuvent être façonnés en grande partie de manière variable dans un contour d'arc prévu (D, R).

10. Toit de tente ou de protection selon une des revendications 1 à 9, **caractérisé en ce que** le module de timonerie (8, 8', 8") est muni de plusieurs bras pivotants (9, 9' ; 10, 11 ; 12 à 15 ; 16, 17) qui saisissent par le dessous des zones respectives du panneau de toit (7', 7").

11. Toit de tente ou de protection selon une des revendications 1 à 10, **caractérisé en ce que** les dimensions des bras pivotants (10, 11) sont réalisées variables, et avec les bras pivotants (10, 11) des contours de toit respectifs agrandis de manière arquée depuis l'espace intérieur de la tente (18) vers l'extérieur sont formés et donc des agrandissements de volume ou de surface variables (B, B', B") peuvent être prédéfinis dans la zone de l'espace utile intérieur.

12. Toit de tente ou de protection selon une des revendications 1 à 11, **caractérisé en ce que** le bras pivotant (16, 17) est directement maintenu de manière mobile au niveau du panneau de toit (7) dans un sac, un rabat ou une zone équivalente de réception (23).

13. Toit de tente ou de protection selon une des revendications 1 à 12, **caractérisé en ce qu'**une zone de bord (24) délimitant le bras pivotant (16, 17) est prévue avec une fermeture-éclair.

14. Toit de tente ou de protection selon une des revendications 1 à 13, **caractérisé en ce que** l'au moins un bras pivotant (12, 13, 14, 15) peut être intégré dans la construction d'une timonerie de toit double présentant deux couches de panneau de toit (7).
